# EUROPÄISCHE PATENTSCHRIFT

(11) **EP 0 975 497 B1**
(45) Veröffentlichungstag und Bekanntmachung des Hinweises auf die Patenterteilung: **14.11.2001**
(21) Anmeldenummer: 98965850.5
(22) Anmeldetag: 17.12.1998
(51) Int. Cl.: B60T 7/10, B60T 13/74

(54) **FESTSTELLBREMSE FÜR FAHRZEUGE**
PARKING BRAKE FOR MOTOR VEHICLES
FREIN DE STATIONNEMENT POUR VEHICULES

(30) Priorität: 17.12.1997 DE 19755933
(43) Veröffentlichungstag der Anmeldung: 02.02.2000
(73) Patentinhaber: KÜSTER & Co. GmbH, 35630 Ehringshausen (DE)
(72) Erfinder: GUTIERREZ, Carmelo, D-35630 Ehringshausen-Katzenfurt (DE); SCHMIDT, Thomas, D-35410 Hungen/Rodheim (DE); SELL, Rainer, D-35584 Wetzlar (DE)
(74) Vertreter: Müller, Eckhard, Dr.
(86) Internationale Anmeldenummer: EP9808285
(87) Internationale Veröffentlichungsnummer: WO9930940

(56) Entgegenhaltungen:
- EP-A- 0 710 595
- WO-A-98/56633
- US-A- 4 865 165

## Beschreibung

Die Erfindung betrifft eine Feststellbremsanlage für Fahrzeuge, insbesondere Personenkraftwagen nach dem Oberbegriff von Anspruch 1.

Eine derartige Feststellbremsanlage ist bereits aus der EP 0 710 595 A1 bekannt. Diese bekannte Feststellbremsanlage besitzt eine Stelleinheit, die mittels eines motorischen Antriebes zum Anziehen oder Lösen wenigstens eines Betätigungszuges einer Bremseinrichtung des Fahrzeuges betätigbar ist. Der Antrieb steht mit einem um eine Längsachse drehbar und bzgl. der Längsachse unverschiebbar gelagerten Bauteil in Antriebsverbindung, während das Bauteil selbst mit einer in Richtung der Längsachse verschiebbar angeordneten Teleskopvorrichtung drehfest gekoppelt ist. Die axiale Länge der Teleskopvorrichtung ist in Abhängigkeit von der Drehrichtung des Bauteils vergrößerbar oder verringerbar. An jedem axialen Ende der Teleskopvorrichtung ist jeweils ein Betätigungszug angekoppelt, wobei die Betätigungszüge mit jeweils einer Bremse der Bremseinrichtung in Verbindung stehen. Die Teleskopvorrichtung der bekannten Feststellbremsanlage zeichnet sich dadurch aus, daß durch den Antrieb zwei Gewindestangen mit gegenläufiger Gewindesteigung in Drehung versetzt werden, wobei die Gewindestangen mit den Innengewinden von entsprechenden, drehfest gelagerten Hülsen in Eingriff stehen. Ein Verdrehen der beiden Gewindestangen führt somit zu einer axialen Verschiebung der entsprechenden Hülsen bzw. der Betätigungszüge. Diese bekannte Feststellbremsanlage ist im Hinblick auf den konstruktiven Aufbau recht kompliziert ausgebildet und weist eine Vielzahl von Teilen auf.

Aus der US 4 865 165 A ist eine weitere Feststellbremsanlage bekannt, die mittels einer Stelleinheit und eines motorischen Antriebes betätigbar ist. Insbesondere wird bei dieser Stelleinheit mittels des Elektromotors ein zylindrisches Bauteil in Rotation versetzt, wobei eine Hohlschraube mit Außengewinde mit dem Innengewinde des zylindrischen Bauteils gekoppelt ist, so daß bei einer Rotationsbewegung des zylindrischen Bauteils je nach Drehrichtung die Hohlschraube axial aus dem zylindrischen Bauteil heraus bzw. in dieses hinein verfahren wird. An der Hohlschraube stützt sich ein axial verschiebbarer Außenschlauch eines Betätigungszuges ab, der durch die Stelleinrichtung somit effektiv entweder verlängert oder verkürzt wird. Durch diese Maßnahme ist ein Spannen bzw. Lösen der Feststellbremse ermöglicht.

Aus der DE 42 05 590 A1 ist bereits eine weitere Feststellbremsanlage für Kraftfahrzeuge mit einem fußbetätigten Bremspedal bekannt. Dabei ist eine zusätzliche Stelleinheit mit einem motorischen Antrieb vorgesehen, die über eine Kopplungsvorrichtung direkt auf das Bremspedal wirkt. Durch Drücken eines Tasters, der sich bspw. im Bediengriff des Fahrzeuggetriebes befindet, wird die Drehrichtung des Elektromotors der Stelleinheit jeweils umgekehrt, so daß das Bremspedal elektromotorisch nach unten verschwenkt bzw. wieder nach oben freigegeben wird. Die mechanische Arretierung des Bremspedals erfolgt über das selbsthemmend ausgelegte Getriebe der Stelleinheit. Die Feststellbremsanlage weist eine elektronische Steuerungseinrichtung auf, mit der der Betriebsstrom des Elektromotors erfaßt und damit eine Aussage über den Drehwinkel des Getriebestirnrades und damit über die Bremskraft und den momentanen Hub des Bremsseilweges gewonnen werden kann. Problematisch bei dieser bekannten Feststellbremsanlage kann jedoch der Ausfall des motorischen Antriebes sein. Sofern mittels der Feststellbremsanlage mehrere Bremsen des Fahrzeuges betätigt werden sollen besteht ein weiteres Problem darin, daß ein ungleichmäßiges Anziehen der Betätigungszüge aufgrund von bspw. unterschiedlichem Verschleiß der Bremsen auftreten kann.

Aus der unveröffentlichten Patentanmeldung 197 28 135.4 der Anmelderin ist weiterhin eine Feststellbremsanlage bekannt, die mit zwei motorischen Antrieben ausgestattet ist, so daß bei einer Störung eines Antriebes weiterhin die volle Funktionsfähigkeit der Feststellbremsanlage gegeben ist. Allerdings stellt diese Maßnahme einen erheblichen technischen Aufwand dar.

Demgegenüber liegt der Erfindung die Aufgabe zugrunde, eine Feststellbremsanlage mit den eingangs genannten Merkmalen dahingehend weiterzubilden, daß ein technisch unkomplizierter, vereinfachter Aufbau gegeben ist. Nach einem nebengeordneten Aspekt der Erfindung soll die Feststellbremsanlage im Fehlerfall, bspw. bei Ausfall des motorischen Antriebes, mechanisch lösbar sein.

Die Hauptaufgabe der Erfindung wird bei der Feststellbremsanlage mit den eingangs genannten Merkmalen i. w. durch die Merkmale des Anspruchs 1 gelöst. Die Teleskopvorrichtung ist durch die, als Keilwelle ausgebildete Hohlwelle, und eine einzige in der Hohlwelle drehbar gelagerte Spindel, Gewindestange o. dgl. gebildet. Dadurch, daß die Hohlwelle als Keilwelle ausgebildet ist und das Zahnrad eine entsprechende Keilnabe aufweist, kann die Hohlwelle bzgl. des Zahnrades in Richtung der Längsachse frei verschoben werden, wobei dennoch eine drehfeste Kopplung zwischen dem Zahnrad und der Welle gegeben ist. Hierdurch wird der konstruktive Aufbau vereinfacht bzw. die Zahl der erforderlichen Teile reduziert. Dadurch, daß die Teleskopvorrichtung bzw. die Hohlwelle und Spindel axial verschiebbar an dem Bauteil bzw. schwimmend in einem Gehäuse der Feststellbremsanlage gelagert ist, findet eine Ausgleichswirkung zwischen den beiden Betätigungszügen für die beiden Bremsen statt, so daß eine gleichmäßige Bremswirkung der beiden Bremsen gewährleistet ist. Darüber hinaus steht die gesamte Feststellbremsanlage nicht unter einer einseitigen Kraftwirkung, wodurch zusätzlich hohe mechanische Belastungen der Feststellbremsanlage vermieden sind. Auf das Gehäuse der Feststellbremsanlage wirkt ggf. lediglich eine Differenzkraft zwischen den Anlenkpunkten der Bremszüge, da die gesamte Teleskopvorrichtung schwimmend in dem Gehäuse der Feststellbremsanlage gelagert ist.

Das Bauteil ist bevorzugt als Zahnrad mit einer axialen Keilnabe ausgebildet. Dabei wird das Zahnrad von dem insbesondere als Elektromotor ausgebildeten motorischen Antrieb über ein Getriebe in Drehung versetzt.

Von Vorteil weist die Welle nach einem anderen Ausführungsbeispiel der Erfindung eine axiale mit einem Innengewinde ausgestattete Bohrung auf, die wenigstens eine Spindel, Gewindestange o. dgl. mit einem Außengewinde aufnimmt. In diesem Fall können die Innenzüge der beiden Betätigungszüge jeweils an einem freien Ende der Welle und der Spindel mittelbar oder unmittelbar befestigt werden.

Es besteht jedoch auch die Möglichkeit, daß in der Bohrung der Welle zwei Spindeln, Gewindestangen o. dgl. mit jeweils entgegengesetzter Gewindesteigung aufgenommen sind. Dann werden die Innenzüge der Betätigungszüge an den jeweils freien Enden der beiden Spindeln, Gewindestangen o. dgl. mittelbar oder unmittelbar befestigt.

Dadurch, daß in die Teleskopvorrichtung ein Kraftsensor integriert ist, der an eine Steuerung der Stelleinheit angeschlossen ist, besteht die Möglichkeit, unzulässige Betriebszustände der Feststellbremsanlage zu detektieren und ggf. den motorischen Antrieb abzuschalten.

Nach einem besonders vorteilhaften, eigenständigen Aspekt ist in die Teleskopvorrichtung eine Löseeinrichtung integriert, mit der die mechanische Verbindung der axialen Enden der Teleskopeinrichtung lösbar ist. Bspw. im Falle eines Ausfalles des motorischen Antriebes können die angezogenen Bremsen dadurch gelöst werden, daß die Löseeinrichtung bspw. mittels eines Betätigungszuges o. dgl. durch den Lenker des Fahrzeuges betätigt und dadurch die mechanische Verbindung der axialen Enden der Teleskopvorrichtung gelöst wird. Infolge der auf die Betätigungszüge wirkenden Federkräfte der Bremsen kommt es dann zu einem Öffnen der Bremsen, so daß die Feststellbremse auch ohne Inbetriebnahme des motorischen Antriebes bzw. bei Ausfall desselben gelöst werden kann.

Dabei hat es sich als vorteilhaft erwiesen, daß die Löseeinrichtung eine mit einem Bolzen, Zapfen o. dgl. zusammenwirkende bzw. in eine Aufnahme eintauchende, insbesondere in der Verriegelungsstellung vorgespannte Sperrklinke aufweist. Befindet sich die Sperrklinke in Verriegelungsstellung, kann die gesamte Teleskopvorrichtung als mechanisch starre Einheit betrachtet werden, wobei der Abstand der freien Enden der Teleskopvorrichtung lediglich durch die Relativposition von Welle und Spindel bestimmt wird. Wird jedoch die Sperrklinke aus der Verriegelungsstellung in eine Entriegelungsstellung überführt, ist diese starre Verbindung der freien Enden der Teleskopvorrichtung aufgehoben, so daß die Teleskopvorrichtung sich unabhängig von einer Betätigung des motorischen Antriebes aufgrund der auf die Teleskopvorrichtung wirkenden Federkräfte der Bremsen selbsttätig längen kann, wodurch die Bremsen des Fahrzeuges gelöst werden.

Von Vorteil ist die Sperrklinke mittels eines Betätigungszuges in die Entriegelungsstellung überführbar. Dabei wird dieser Betätigungszug bevorzugt von dem Lenker des Fahrzeuges im Falle eines Ausfalls des motorischen Antriebes betätigt.

Weiterhin hat es sich als vorteilhaft erwiesen, daß die beiden freien axialen Enden der Teleskopvorrichtung mit jeweils einem Innenzug der Betätigungszüge verbunden sind und die Außenmäntel der Betätigungszüge in endseitigen axialen Aufnahmen eines Gehäuses der Feststellbremsanlage aufgenommen sind.

Weitere Vorteile und Anwendungsmöglichkeiten der vorliegenden Erfindung ergeben sich aus der nachfolgenden Beschreibung der Ausführungsbeispiele anhand der Zeichnungen.

Es zeigen:
- Figur 1: in schematischer Ansicht einen Personenkraftwagen mit einem Einbau der erfindungsgemäßen Feststellbremsanlage,
- Figur 2: eine perspektivische Ansicht eines Ausführungsbeispiels der erfindungsgemäßen Feststellbremsanlage mit teilweise nicht dargestelltem Gehäuse, wobei die Betätigungszüge gelöst sind,
- Figur 2a: die Löseeinrichtung der Figur 2 im verriegelten Zustand,
- Figur 3: die Feststellbremsanlage der Figur 2, wobei die Betätigungszüge und damit die Bremsen durch Verkürzung der Teleskopeinrichtung angezogen sind,
- Figur 3a: die Löseeinrichtung im verriegelten Zustand,
- Figur 4: die Feststellbremsanlage der Figur 3, wobei der Entriegelungshebel für die Löseeinrichtung betätigt wird,
- Figur 4a: die Löseeinrichtung während des Entriegelungsvorganges,

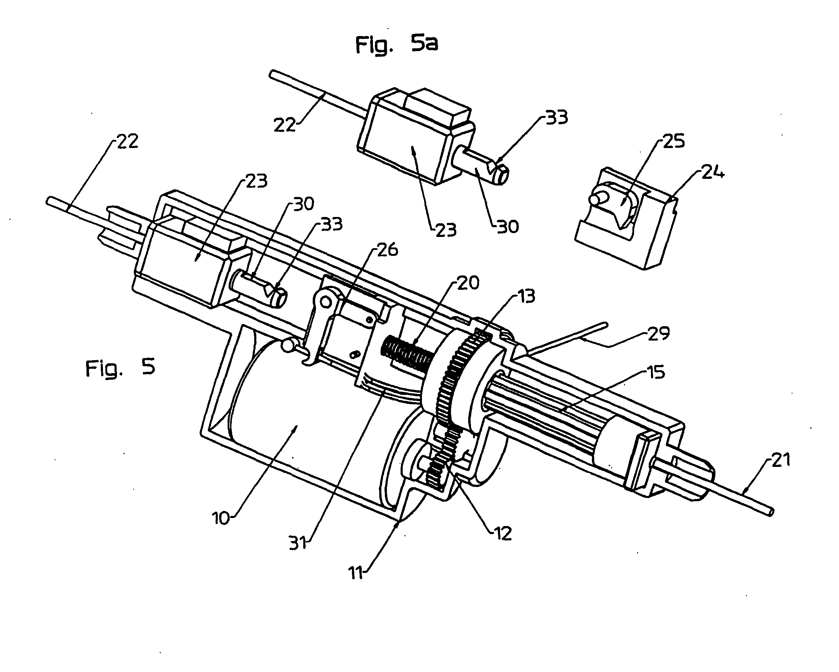

- Figur 5: die Feststellbremsanlage der Figur 4 mit entriegelter Löseeinrichtung und
- Figur 5a: die Löseeinrichtung im völlig entriegelten Zustand.

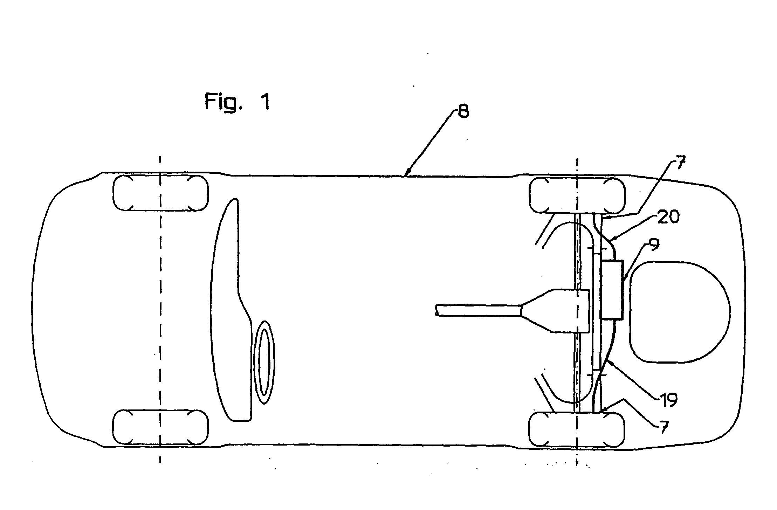

In Figur 1 ist der Einbauort der Feststellbremsanlage gemäß der vorliegenden Erfindung in einem Personenkraftwagen 8 näher dargestellt. Die Stelleinheit 9 ist im Bereich der Hinterachse des Personenkraftwagens 8 befestigt, wobei die beiden Betätigungszüge 18, 19 zur Betätigung der beiden Bremsen der Bremseinrichtung 7 der Hinterräder dienen.

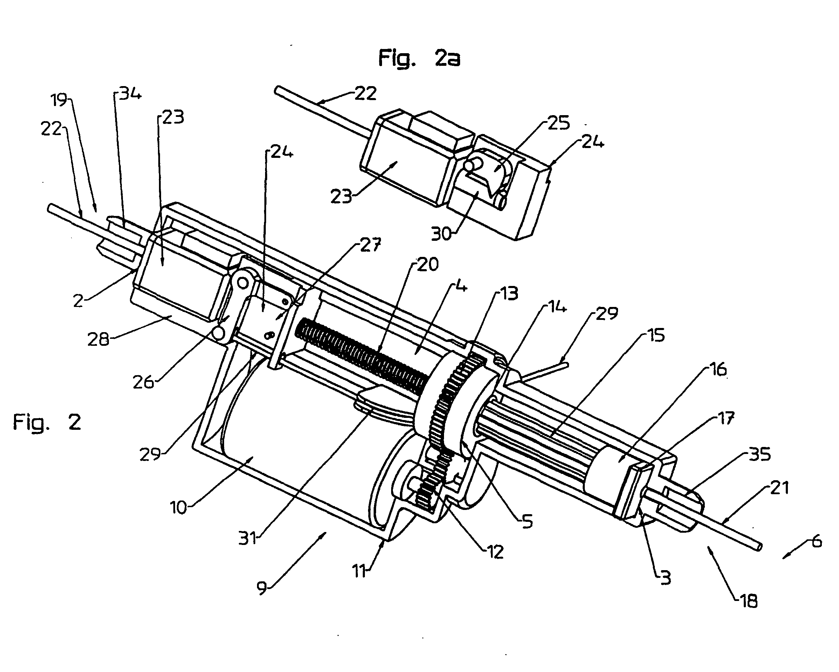

In Figur 2 ist die Stelleinheit 9 im Detail und bei gelöster Feststellbremse dargestellt. Die Stelleinheit 9 weist ein Gehäuse 11 auf, in dem neben einem motorischen Antrieb 10 und einem Getriebe 12 ein als Zahnrad 13 ausgebildetes Bauteil 5 angeordnet ist. Das Zahnrad 13 besitzt eine Keilnabe 14 und ist in dem Gehäuse 11 um eine Längsachse 6 drehbar aber bzgl. der Längsachse 6 unverschiebbar gelagert. Das Bauteil 5 wirkt mit einer Teleskopvorrichtung 4, die ein erstes axiales Ende 2 und ein zweites axiales Ende 3 aufweist, zusammen. Wird das Bauteil 5 durch den motorischen Antrieb 10 in Drehung versetzt, dreht sich die Teleskopvorrichtung 4 mit, da diese drehfest mit dem Bauteil 5 gekoppelt ist. Allerdings ist die Teleskopvorrichtung 4 bzgl. der Längsachse 6 verschieblich in dem Bauteil 5 gelagert. Die Teleskopvorrichtung 4 wird durch eine Keilwelle 15 und eine Spindel 20 gebildet. Hierzu ist die Keilwelle 15 als Hohlwelle mit einem Innengewinde ausgebildet, welches mit der Spindel 20 zusammenwirkt. Das freie axiale Ende 3 der Keilwelle 15 weist ein Lager 16 mit einer Verdrehsicherung 17 für einen Innenzug 21 eines Betätigungszuges 18 für die erste Bremse auf. Bei einer Verdrehung des Zahnrades 13 und dem damit einhergehenden Verdrehen der Keilwelle 15 um die Längsachse 6 schraubt sich die Spindel 20 je nach Drehrichtung entweder in die Keilwelle 15 hinein oder aus ihr heraus. An dem gegenüberliegenden freien axialen Ende 2 der Spindel 20 ist der weitere Innenzug 22 des zweiten Betätigungszuges 19 befestigt. Bei Betätigung des motorischen Antriebes 10 und Verdrehen des Zahnrades 13 kommt es somit je nach Drehrichtung zu einer teleskopartigen Verkürzung bzw. Verlängerung der Teleskopvorrichtung 4, insbesondere der Spindel 20 und der Keilwelle 15, mit der Folge eines Schließens oder Öffnens der beiden Bremsen über die Innenzüge 21 und 22. Die beiden freien axialen Enden 2 und 3 der Teleskopvorrichtung 4 sind somit jeweils mit einem der Innenzüge 21, 22 der Betätigungszüge 18, 19 verbunden. Die Außenmäntel dieser Betätigungszüge 18, 19 sind in endseitigen axialen Aufnahmen 34, 35 des Gehäuses 11 der Feststellbremsanlage aufgenommen.

Wesentlich für die Ausgestaltung des Ausführungsbeispiels ist die Maßnahme, daß die Teleskopvorrichtung 4 bzw. die Keilwelle 15 in der Aufnahme des Bauteils 5, insbesondere der Keilnabe 14 des Zahnrades, 13 axial frei verschiebbar aufgenommen ist. Hierdurch ist die Teleskopvorrichtung 4 innerhalb des Gehäuses 11 schwimmend gelagert. Durch diese Ausgleichswirkung wird zum einen eine gleichmäßige Beaufschlagung der beiden Bremsen gewährleistet, zum anderen wird das Gehäuse 11 der Feststellbremsanlage nicht mit der gesamten, auf die Bremsbacken wirkenden Kraft beaufschlagt, sondern allenfalls mit einer ggf. vorhandenen Differenzkraft zwischen den Betätigungskräften der beiden Bremsen.

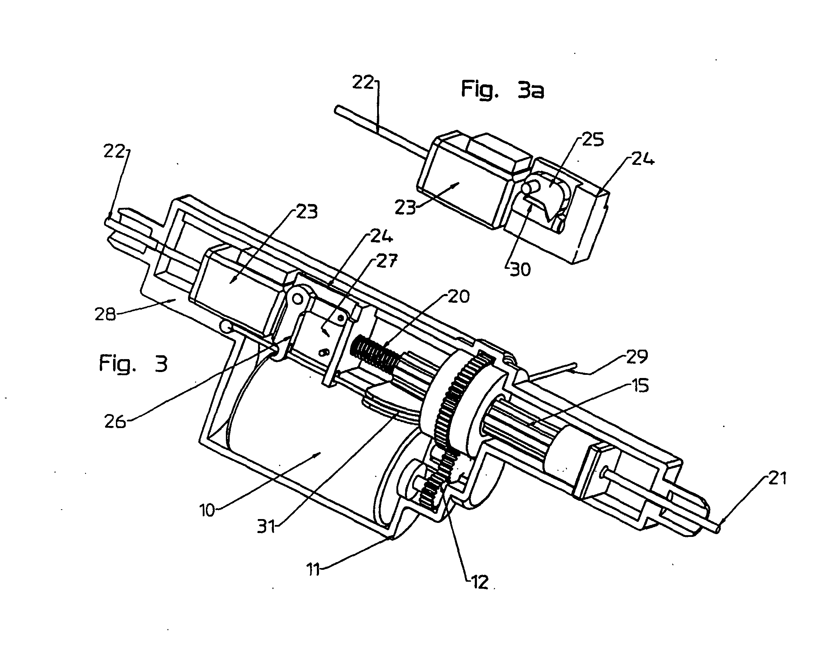

In Figur 3 ist die Feststellbremsanlage der Figur 2 mit nun verkürzter Teleskopvorrichtung 4 dargestellt, wobei die Bremsen in den geschlossenen bzw. angezogenen Zustand überführt sind. Deutlich ist erkennbar, daß die Keilwelle 15 bzw. die Teleskopvorrichtung 4 in Bezug auf das Bauteil 5 bzw. Zahnrad 13 eine andere axiale Positionierung einnimmt. Dies ist bspw. auf unterschiedlichen Verschleiß der beiden zu betätigenden Bremsen bzw. eine Kompensation von Längenunterschieden bei den Innenzügen 21, 22 zurückzuführen.

Wie aus den Zeichnungen ersichtlich, ist in die Teleskopvorrichtung 4 ein Kraftsensor 23 integriert. Diese alternative Maßnahme hat den Vorteil, daß im Falle des Auftretens sehr hoher Zugkräfte, die einen bestimmten zulässigen Grenzwert überschreiten, mittels des Kraftsensors bspw. die Stelleinheit 9 oder der motorische Antrieb 10 abgeschaltet werden kann, um eine Beschädigung der Bremsen bzw. der Betätigungszüge 18, 19 zu vermeiden.

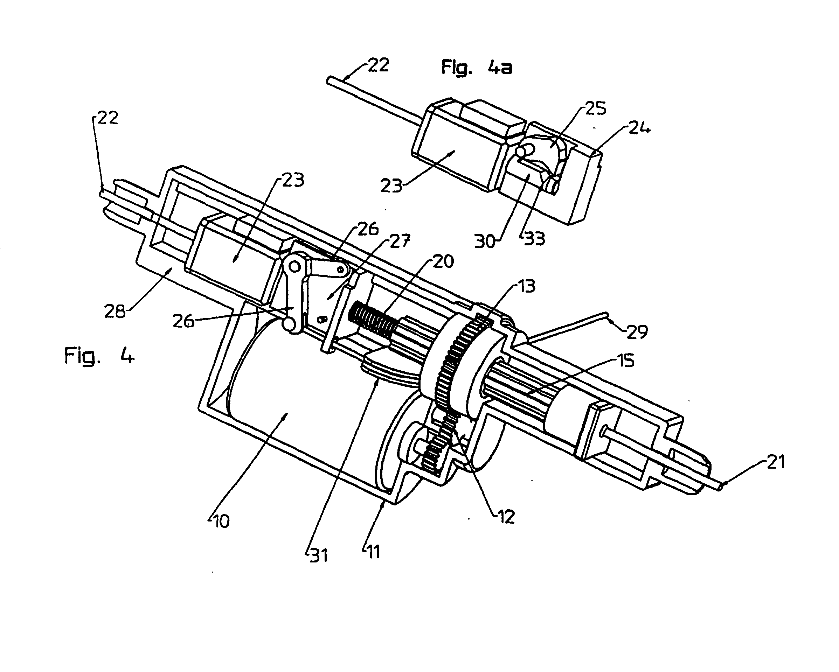

Nach einer besonders vorteilhaften, eigenständigen Ausgestaltung der Erfindung ist in die Teleskopvorrichtung 4 eine Löseeinrichtung 24 integriert. Diese bevorzugt mechanisch betätigbare Löseeinrichtung 24 dient dazu, im Falle einer Störung, bspw. eines Ausfalls des motorischen Antriebes 10 und angezogener Feststellbremse die mechanische Verbindung der axialen Enden 2 und 3 der Teleskopeinrichtung 4 voneinander zu lösen. Wie den Figuren zu entnehmen ist, besteht diese Löseeinrichtung 24 aus einer Sperrklinke 25, die von einem federbelasteten Entriegelungshebel 26 betätigbar ist. Bei Betätigung des Entriegelungshebels 26 wird die feste mechanische Verbindung zwischen den freien axialen Enden 2 und 3 der Teleskopvorrichtung 4 gelöst. Die Löseeinrichtung 24 ist mittels der Feder 27 in der Verrieglungsstellung gehalten. Eine Entriegelung kann durch Betätigung des Betätigungszuges 29 erreicht werden, wodurch der Entriegelungshebel 26 in eine Entriegelungsstellung verschwenkt wird. Dieser Zustand ist der Figur 4, 4a zu entnehmen. Insbesondere aus Figur 4a ist ersichtlich, daß in dem Entriegelungszustand die Sperrklinke 25 nicht mehr in die Aufnahme 33 des Bolzens 30 eintaucht, welcher im vorliegenden Ausführungsbeispiel am Kraftsensor 23 angeordnet ist. Natürlich besteht auch die Möglichkeit, den Innenzug 22 unmittelbar an dem Bolzen 30 anzulenken. Um den Betätigungszug 29 für die Löseeinrichtung 24 auf Spannung zu halten, ist das Ende des Betätigungszuges 29 mittels einer Feder 28 am Gehäuse 11 der Feststellbremsanlage angelenkt. Über eine Umlenkung 31 ist dieser Betätigungszug 29 aus dem Gehäuse 11 heraus geführt.

Im Falle einer Fehlbedienung der mechanischen Entriegelung ist es in einfacher Weise möglich, die Feststellbremsanlage wieder gangbar zu machen. Hierfür wird der motorische Antrieb 10 in Betrieb gesetzt, so daß sich das freie Ende der Keilwelle 15 an dem Gehäuse 11 abstützt und die Gewindespindel 20 in Richtung des Bolzens verschoben wird, bis die Sperrklinke 25 in die Aufnahme 33 des Bolzens 30 einschnappt.

### Bezugszeichenliste

- 2: axiales Ende
- 3: axiales Ende
- 4: Teleskopvorrichtung
- 5: Bauteil
- 6: Längsachse
- 7: Bremseinrichtung
- 8: Personenkraftwagen
- 9: Stelleinheit
- 10: motorischer Antrieb
- 11: Gehäuse
- 12: Getriebe
- 13: Zahnrad
- 14: Keilnabe
- 15: Keilwelle
- 16: Lager Verdrehsicherung
- 17: Verdrehsicherung
- 18: Betätigungszug
- 19: Betätigungszug
- 20: Spindel
- 21: Innenzug
- 22: Innenzug
- 23: Kraftsensor
- 24: mechanische Löseeinrichtung
- 25: Sperrklinke
- 26: Entriegelungshebel
- 27: Feder
- 28: Feder
- 29: Betätigungszug
- 30: Bolzen
- 31: Umlenkung
- 32: Spindel
- 33: Aufnahme
- 34: Aufnahme
- 35: Aufnahme

## Patentansprüche

1. Feststellbremsanlage für Fahrzeuge, insbesondere Personenkraftwagen (8), mit einer einen motorischen Antrieb (10) aufweisenden Stelleinheit (9) zum Anziehen oder Lösen wenigstens eines Betätigungszuges (18, 19) einer Bremseinrichtung (7) des Fahrzeuges, wobei der Antrieb (10) mit einem, um eine Längsachse (6) drehbar und bzgl. der Längsachse (6) unverschiebbar gelagerten Bauteil (5) in Antriebsverbindung steht, das Bauteil (5) mit einer in Richtung der Längsachse (6) verschiebbar angeordneten Teleskopvorrichtung (4) gekoppelt ist, die axiale Länge der Teleskopvorrichtung (4) in Abhängigkeit von der Drehrichtung des Bauteils (5) vergrößert oder verringert wird und jedes axiale Ende (2, 3) der Teleskopvorrichtung (4) jeweils mit einem Betätigungszug (18, 19) für eine Bremse der Bremseinrichtung (7) mittelbar oder unmittelbar verbunden ist, **dadurch gekennzeichnet, daß** die Teleskopvorrichtung (4) durch eine einzige als Keilwelle (15) ausgebildete Hohlwelle und eine einzige in der Keilwelle (15) drehbar gelagerte Spindel (20), Gewindestange o. dgl. gebildet ist, wobei die Keilwelle (15) drehfest mit dem Bauteil (5) gekoppelt und relativ zum Bauteil (5) in Richtung der Längsachse (6) verschiebbar ist.

2. Feststellbremsanlage nach Anspruch 1, **dadurch gekennzeichnet, daß** das Bauteil als Zahnrad (13) mit axialer Keilnabe (14) o. dgl. ausgebildet ist.

3. Feststellbremsanlage nach Anspruch 1 oder 2, **dadurch gekennzeichnet, daß** die Keilwelle (15) eine axiale mit Innengewinde ausgestattete Bohrung aufweist, die die Spindel (20), Gewindestange o. dgl. mit einem Außengewinde aufnimmt.

4. Feststellbremsanlage nach einem der vorhergehenden Ansprüche, **dadurch gekennzeichnet, daß** in die Teleskopvorrichtung (4) ein Kraftsensor (23) integriert ist, der an eine Steuerung der Stelleinheit (9) angeschlossen ist.

5. Feststellbremsanlage nach einem der vorhergehenden Ansprüche, **dadurch gekennzeichnet, daß** in die Teleskopvorrichtung (4) eine Löseeinrichtung (24) integriert ist, mit der die mechanische Verbindung der axialen Enden (2, 3) der Teleskopeinrichtung lösbar ist.

6. Feststellbremsanlage nach Anspruch 5, **dadurch gekennzeichnet, daß** die Löseeinrichtung (24) eine mit einem Bolzen (30), Zapfen o. dgl. zusammenwirkende bzw. in eine Aufnahme (33) eingreifende, insbesondere in der Verriegelungsstellung vorgespannte Sperrklinke (25) aufweist.

7. Feststellbremsanlage nach Anspruch 6, **dadurch gekennzeichnet, daß** die Sperrklinke (25) mittels eines Betätigungszuges (29) in die Entriegelungsstellung überführbar ist.

8. Feststellbremsanlage nach einem der vorhergehenden Ansprüche, **dadurch gekennzeichnet, daß** die freien axialen Enden (2, 3 der Teleskopvorrichtung (4) mit jeweils einem Innenzug (21, 22) der Betätigungszüge (18, 19) verbunden sind und die Außenmäntel der Betätigungszüge (18, 19) in endseitige axiale Aufnahmen (34, 35) eines Gehäuses (11) der Feststellbremsanlage aufgenommen sind.

## Claims

1. Parking brake installation for vehicles, especially passenger motor vehicles (8), with a setting unit (9), which comprises a motorised drive (10), for applying or releasing at least one actuating pull (18, 19) of a braking device (7) of the vehicle, wherein the drive (10) is in driving connection with a component (5) which is rotatable about a longitudinal axis (6) and mounted to be non-slidable with respect to the longitudinal axis (6), the component (5) is coupled with a telescopic device (4) arranged to be slidable in the direction of the longitudinal axis (6), the axial length of the telescopic device (4) is increased or reduced in dependence on the rotational direction of the component (5) and each axial end (2, 3) of the telescopic device (4) is directly or indirectly connected with a respective actuating pull (18, 19) for a brake of the braking device (7), **characterised in that** the telescopic device (4) is formed by a single hollow shaft constructed as a splined shaft (15) and a single spindle (20), threaded rod or the like rotatably mounted in the splined shaft (15), wherein the splined shaft (15) is coupled to the component (5) to be secure against rotation relative thereto and is slidable relative to the component (5) in the direction of the longitudinal axis (6).

2. Parking brake installation according to claim 1, **characterised in that** the component is constructed as a gearwheel (13) with an axial splined hub (14) or the like.

3. Parking brake installation according to claim 1 or 2, **characterised in that** the splined shaft (15) has an axial bore furnished with an internal thread and receives the spindle (20), threaded rod or the like with an external thread.

4. Parking brake installation according to one of the preceding claims, **characterised in that** a force sensor (23), with which a control of the setting unit (9) is connected, is integrated in the telescopic device (4).

5. Parking brake installation according to one of the preceding claims, **characterised in that** a release device (24), by which the mechanical connection of the axial ends (2, 3) of the telescopic device is releasable, is integrated in the telescopic device (4).

6. Parking brake installation according to claim 5, **characterised in that** the release device (24) comprises a pawl (25) co-operating with a bolt (30), pin or the like or engaging in a recess (33) and, in particular, biassed into the locking setting.

7. Parking brake installation according to claim 6, **characterised in that** the pawl (25) can be transferred into the unlocked setting by means of an actuating pull (29).

8. Parking brake installation according to one of the preceding claims, **characterised in that** the free axial ends (2, 3) of the telescopic device (4) are each connected with a respective inner pull (21, 22) of the actuating pulls (18, 19) and the outer casings of the actuating pulls (18, 19) are received in axial receptacles (34, 35), which are at the ends of a housing (11) of the parking brake installation.

## Revendications

1. Système de frein de stationnement pour véhicules, en particulier pour voitures particulières (8), comprenant un ensemble actionneur (9) contenant un entraînement à moteur (10) destiné à serrer et à desserrer l'un au moins des câbles de commande (18, 19) d'un système de freinage (7) du véhicule, l'entraînement (10) étant en liaison motrice avec un composant (5) monté de façon à pouvoir tourner autour d'un axe longitudinal (6) mais sans pouvoir coulisser par rapport à l'axe longitudinal (6), le composant (5) étant accouplé à un dispositif télescopique (4) coulissant dans le sens de l'axe longitudinal (6), la longueur axiale du dispositif télescopique (4) pouvant être agrandie ou réduite en fonction du sens de rotation du composant (5), et chaque extrémité axiale (2, 3) du dispositif télescopique (4) étant respectivement reliée de façon indirecte ou directe à un câble de commande (18, 19) de l'un des freins du système de freinage (7),
**caractérisé en ce que** le dispositif télescopique (4) est constitué par un arbre creux unique réalisé sous forme d'un arbre cannelé (15), et par une broche unique (20), tige filetée, ou similaire, logée de façon rotative dans l'arbre cannelé (15), l'arbre cannelé (15) étant accouplé de façon solidaire en rotation au composant (5) et pouvant être déplacé par rapport au composant (5) dans le sens de l'axe longitudinal (6).

2. Système de frein de stationnement selon la revendication 1, **caractérisé en ce que** le composant est réalisé sous forme d'un pignon (13) muni d'un moyeu cannelé axial (14) ou similaire.

3. Système de frein de stationnement selon la revendication 1 ou 2, **caractérisé en ce que** l'arbre cannelé (15) comporte un alésage axial pourvu d'un filetage intérieur qui reçoit la broche (20), tige filetée ou similaire, portant un filetage extérieur.

4. Système de frein de stationnement selon l'une des revendications précédentes, **caractérisé en ce qu'**un capteur de force (23) est intégré dans le dispositif télescopique (4) et est raccordé à un système de commande de l'ensemble actionneur (9).

5. Système de frein de stationnement selon l'une des revendications précédentes, **caractérisé en ce qu'**un dispositif libérateur (24) est intégré dans le dispositif télescopique (4), permettant de défaire la liaison mécanique entre les extrémités axiales (2, 3) du dispositif télescopique.

6. Système de frein de stationnement selon la revendication 5, **caractérisé en ce que** le dispositif libérateur (24) comporte un cliquet d'arrêt (25) coopérant avec un axe (30), un tenon ou similaire, ou s'engageant dans un évidement (33), en particulier un cliquet précontraint en position de verrouillage.

7. Système de frein de stationnement selon la revendication 6, **caractérisé en ce que** le cliquet d'arrêt (25) peut être amené en position de déverrouillage par l'intermédiaire d'un câble de commande (29).

8. Système de frein de stationnement selon l'une des revendications précédentes, **caractérisé en ce que** les extrémités libres axiales (2, 3) du dispositif télescopique (4) sont respectivement reliées à un câble intérieur (21, 22) des câbles de commande (18, 19), et que les gaines extérieures des câbles de commande (18, 19) sont montées dans des logements axiaux (34, 35) d'un boîtier (11) du système de frein de stationnement.
